# EUROPÄISCHE PATENTSCHRIFT

(11) **EP 2 879 938 B1**
(45) Veröffentlichungstag und Bekanntmachung des Hinweises auf die Patenterteilung: **24.08.2016**
(21) Anmeldenummer: 13725304.3
(22) Anmeldetag: 15.05.2013
(51) Int. Cl.: B62D 13/06, B62D 15/02, B60R 1/00, B60W 30/06, G01B 11/27

(54) **VERFAHREN UND VORRICHTUNG ZUM RANGIEREN EINES ANHÄNGERS**
METHOD AND DEVICE TO SHUNT A TRAILER
PROCÉDÉ ET APPAREIL POUR GARER UN REMORQUE

(30) Priorität: 03.08.2012 DE 102012015435
(43) Veröffentlichungstag der Anmeldung: 10.06.2015
(73) Patentinhaber: Volkswagen Aktiengesellschaft, 38440 Wolfsburg (DE)
(72) Erfinder: HÜGER, Philipp, 38471 Rühen (DE); WUTTKE, Ulrich, 38126 Braunschweig (DE); LEUCHTER, Daniel, 38440 Wolfsburg (DE)
(86) Internationale Anmeldenummer: PCT/EP2013/060055
(87) Internationale Veröffentlichungsnummer: WO 2014/019730

(56) Entgegenhaltungen:
- EP-A2- 2 388 180
- DE-A1-102007 011 180
- DE-A1-102007 029 413
- US-A1- 2012 185 131

## Beschreibung

Die Erfindung betrifft ein Verfahren zum Rangieren eines Anhängers eines Kraftfahrzeugs gemäß dem Oberbegriff des Anspruchs 1 sowie eine Vorrichtung zum Rangieren eines Anhängers eines Kraftfahrzeugs, also einen Anhängerrangierassistenten, gemäß dem Oberbegriff des Anspruchs 7.

Das Rangieren eines Gespanns bestehend aus einem Kraftfahrzeug mit einem Anhänger ist generell als schwierig einzustufen, wobei die Schwierigkeit bei der Rückwärtsfahrt zunimmt, da der Anhänger dabei zum Ausscheren neigt. Insbesondere ist für ungeübte Personen das Einlenken des Anhängers eines Gespanns bei einer Änderung des Lenkwinkels des Zugfahrzeugs bei einer Rückwärtsfahrt nicht ohne weiteres nachvollziehbar, so dass es bei einem Einparken eines Gespanns häufig aufgrund eines vom Fahrer ungünstig gewählten Lenkwinkels zu einer Kollision mit einem benachbarten Hindernis oder zu einem Einknicken des Gespanns kommt.

Aus der Druckschrift DE 198 06 655 A1 ist eine elektronische Rangierhilfe für die Rückwärtsfahrt eines Lastwagens mit einem lenkbaren Anhänger bekannt, wobei der Anhänger über eine Deichsel mit der rückwärtigen Anhängerkupplung des Lastwagens gekoppelt ist. Über Winkelaufnehmer werden die Stellung von Anhänger und Lastwagen zu Beginn der Rückwärtsfahrt ermittelt. Ein Steuergerät steuert ausgehend von den gemessenen Winkeln in Verbindung mit den Abmessungen des Lastwagens und des Anhängers die Lenkung des Lastwagens, so dass sich Lastwagen und Anhänger beide auf errechneten Kreisbahnen bewegen.

Aus der Druckschrift DE 101 54 612 A1 ist ein Verfahren zum Lenken eines Zugfahrzeugs mit einem Anhänger bei Rückwärtsfahrt bekannt, wobei eine elektronische Steuereinheit, die zumindest Korrekturen für den Lenkeinschlag der lenkbaren Räder des Zugfahrzeugs in Abhängigkeit vom Winkel zwischen der Längsachse des Zugfahrzeugs und der Längsachse des Anhängers, d.h. der Stellung der Deichsel, vorgibt. Dabei wird der Winkel aus den Signalen zumindest zweier Abstandsensoren ermittelt, die am Zugfahrzeug oder am Anhänger vorgesehen sind, um den jeweiligen Abstand zwischen Zugfahrzeug und Anhänger zu bestimmen.

Aus der Druckschrift DE 10 2006 048 947 A1 ist eine Steuereinheit für einen an ein Fahrzeug anzukoppelnden Anhänger bekannt, mit welcher der Anhänger aus einer ersten Stellung in eine zweite Stellung in Bezug auf das Fahrzeug verbracht werden kann, wodurch insbesondere das Rückwärtseinparken eines Fahrzeugs mit angekoppeltem Anhänger erleichtert wird. Dabei kann der Fahrer des Fahrzeugs einen Winkel zwischen der Mittellängsachse des Fahrzeugs und der Mittellängsachse des Anhängers wählen, so dass bei einer Rückwärtsfahrt die Steuereinheit den Anhänger von der aktuellen Winkelposition in die gewählte Soll-Winkelposition bringt. Als Bedienelement wird für die Wahl der Winkelposition der Blinkerhebel in Verbindung mit dem Rückwärtsgang verwendet, wobei der gewählte Winkel während der Rückwärtsfahrt veränderbar ist. Ferner erfolgt die Erkennung des aktuellen Winkels des Anhängers über einen im Kugelkopf der Deichsel angebrachten Drehwinkelsensor. Nachteilig ist, dass die Einstellung des Soll-Winkels während der Fahrt erfolgt. Ferner bedingt die Erkennung des aktuellen Deichselwinkels einen separaten, im Kugelkopf der Deichsel angeordneten Sensor, was mit zusätzlichen Kosten verbunden ist.

Der Druckschrift US 2012/185131 A1 wird als naheliegend Stand der Technik erkannt und offenbart die Merkmale des Oberbegriffs der Ansprüche 1 und 7.

Der Erfindung liegt daher die Aufgabe zugrunde, ein Verfahren zum Rangieren eines Gespanns und einen entsprechenden Anhängerrangierassistenten zu vereinfachen.

Diese Aufgabe wird durch ein Verfahren zum Rangieren eines Anhängers mit den Merkmalen des Anspruchs 1 sowie durch einen Anhängerrangierassistenten mit den Merkmalen des Anspruchs 7 gelöst. Bevorzugte Ausführungsformen der Erfindung sind Gegenstand der Unteransprüche.

Das erfindungsgemäße Verfahren zum Rangieren eines Gespanns bestehend aus einem Zugfahrzeug und einem Anhänger, wobei der Anhänger mittels einer nichtlenkbaren Deichsel mit dem Zugfahrzeug verbunden ist und das Zugfahrzeug mittels einer Rückfahrkamera das rückwärtige Umfeld einschließlich Anhänger beobachtet, umfasst die folgenden Schritte:
a) Bestimmung des Ist-Knickwinkels des Anhängers relativ zum Zugfahrzeug,
b) Bestimmung der Deichsellänge und des maximalen Knickwinkels des Anhängers,
c) Eingabe des Soll-Knickwinkels des Anhängers,
d) Rückwärtsfahren des Zugfahrzeugs mit zumindest aktiver Lenkunterstützung bis zum Erreichen des Soll-Knickwinkel des Anhängers,
e) Fixieren der durch den Soll-Knickwinkel vorgegebenen Fahrtrichtung,
f) Rangieren des Zugfahrzeugs mit zumindest aktiver Lenkunterstützung unter Beibehaltung der vorgegebenen Fahrtrichtung bis zum Erreichen einer endgültigen Parkposition.

Vorzugsweise wird der oben genannte Schritt f) ausgeführt, indem in einem ersten Schritt f1) durch ein Rangieren des Zugfahrzeugs die Längsachse des Zugfahrzeugs in Übereinstimmung mit der Längsachse des Anhängers unter Beibehaltung der vorgegebenen Fahrtrichtung gebracht wird, und in einem anschließenden zweiten Schritt f2) ein Rückwärtsfahren des gerade ausgerichteten Gespanns mit zumindest aktiver Lenkunterstützung bis zum Erreichen der endgültige Parkposition erfolgt. Mit anderen Worten, das Zugfahrzeug muss im Schritt f1 fluchtend zur Längsachse des Anhängers ausgerichtet werden, ohne dass die Richtung des Anhängers verändert wird, damit das Gespann dann im weiteren Verlauf in rückwärtiger Richtung im Schritt f2 zur endgültigen Standposition rangiert wird.

Weiter bevorzugt stehen zur Durchführung des Schrittes f1) zwei Moden zur Verfügung, wobei der erste Modus das Rangieren bei breiter Fahrgasse und der zweite Modus das Rangieren bei enger Fahrgasse betreffen. Breite Fahrgasse bedeutet dabei ausreichend Manövrierplatz, also Manövrieren beispielsweise auf einem großen Platz oder einer großen Wiese, wo die endgültige Parkposition nicht exakt festgelegt werden muss und das Gespann insbesondere seitlichen Platz zum Rangieren vorfindet. Enge Fahrgasse bedeutet, wie es der Name bereits impliziert, beschränkten Rangierraum, also insbesondere einen geringen seitlichen Spielraum. Eine derartige Situation ist beispielsweise bei einer engen Einfahrt oder einer Toreinfahrt gegeben.

Vorzugsweise kann die Durchführung des Schrittes f1) im ersten Modus in einem einzügigen Rangiervorgang erfolgen, so dass die Zieltrajektorie des Schrittes f2) zur Erreichung der endgültigen Parkposition im ersten Modus parallel zur vorgegebenen Fahrtrichtung liegt.

Weiter bevorzugt kann die Durchführung des Schrittes f1) im zweiten Modus in einem mehrzügigen Rangiervorgang erfolgen, so dass die Zieltrajektorie des Schrittes f2) zur Erreichung der endgültigen Parkposition im zweiten Modus in der vorgegebenen Fahrtrichtung liegt.

Ferner kann die Eingabe des Soll-Knickwinkels in Schritt c) im Stand oder während der Rückwärtsfahrt erfolgen. Dabei kann der Fahrer das durch die Rückfahrkamera aufgenommene Umfeld in einem separaten Display beobachten.

Ein erfindungsgemäßer Anhängerrangierassistent eines Kraftfahrzeugs zur Durchführung des im Vorangegangenen beschriebenen Verfahrens umfasst eine Steuereinrichtung, eine HMI-Einrichtung zur Kommunikation mit dem Fahrer des Kraftfahrzeugs, eine Einrichtung zur Detektion eines angekoppelten Anhängers, und einen Aktuator zur Betätigung der Lenkung, wobei
- der Anhängerrangierassistent eine Rückfahrkamera zur Aufnahme von Bildern der rückwärtigen Umgebung aufweist,
- die Steuereinrichtung eine Einrichtung zur Bestimmung des Ist-Knickwinkels und zur Bestimmung des maximal zulässigen Knick-Winkels des angekoppelten Anhängers aus den Bildern der Rückfahrkamera aufweist, und
- die HMI-Einrichtung eine Einrichtung zur Eingabe eines Soll-Knickwinkels des Anhängers aufweist, wobei
- die HMI-Einrichtung die Ist-Position des Anhängers im Ist-Knickwinkel und die Soll-Position des Anhängers im Soll-Knickwinkel dynamisch darstellt.

Damit erhält der Fahrer eine direkte Darstellung der Ist- und der gewünschten Soll-Position des Anhängers bzw. des Gespanns und ist jederzeit über den Ablauf der Anhängerassistenz informiert. Ferner kann das Umgebungsbild der Rückkamera beispielsweise noch auf ein geeignetes zentrales Display übertragen werden, so dass der Fahrer den Ablauf der Assistenz auch im realen Umfeld beobachten und kontrollieren kann. Ist-Knickwinkel und Soll-Knickwinkel können auch in das reale Bild eingeblendet werden. In der HMI-Darstellung sind die Ist-Position und die virtuelle Soll-Position üblicherweise in Draufsicht dargestellt.

Vorzugsweise übermittelt zur Aktivierung der Assistenz die HMI-Einrichtung dem Fahrer des Kraftfahrzeugs eine vorgegebene Anzahl von Informationshinweisen. Derartige Informationshinweise sind die Aufforderung zur Aktivierung des Anhängerrangierassistenten, Hinweise auf einen aktiven Lenkeingriff und Hinweise zur Bedienung des Assistenten. Weiter bevorzugt weist die HMI-Einrichtung eine Einrichtung zur Fixierung eines erreichten Soll-Knickwinkels auf, wobei die Steuereinrichtung den fixierten Soll-Knickwinkel als vorgegebene Richtung zur Ermittlung einer Zieltrajektorie zur Erreichung einer endgültigen Parkposition verwendet. Durch die Fixierung des erreichten Soll-Knickwinkels wird die Richtung der weiteren Bewegung des Gespanns festgelegt.

Weiter bevorzugt weist die HMI-Einrichtung eine Auswahleinrichtung auf, mittels welcher ausgewählt wird, ob die Zieltrajektorie parallel zur vorgegebenen Richtung oder in Richtung der vorgegebenen Richtung verläuft. Somit kann im ersten Modus ein einzügiger Rangiervorgang durchgeführt werden, während im zweiten Modus der Rangiervorgang im Allgemeinen mehrzügig ist. Diese Maßnahme stellt das Verhalten in engen oder breiten Fahrumgebungen sicher.

Eine bevorzugte Ausführungsform der Erfindung wird nachfolgend anhand der Zeichnungen erläutert. Dabei zeigt
- Fig. 1: ein Kombiinstrument mit Mittendisplay,
- Fig. 2: die Startabfrage des Anhängerrangierassistenten,
- Fig. 3: den Hinweis auf einen aktiven Lenkeingriff des Assistenten,
- Fig. 4: den Bedienhinweis zur Bedienung des Anhängerrangierassistenten,
- Fig. 5: das Startbild des aktiven Anhängerrangierassistenten,
- Fig. 6: die Anzeige des Anhängerrangierassistenten mit erkannter Deichsel,
- Fig. 7: die Anzeige des Anhängerrangierassistenten mit eingestelltem Winkel,
- Fig. 8: die Anzeige des Anhängerrangierassistenten bei erreichtem Winkel,
- Fig. 9: die Anzeige des Anhängerrangierassistenten beim Fixieren der Zielrichtung, und
- Fig. 10: die Anzeige des Anhängerrangierassistenten bei erreichtem Zielstandpunkt.

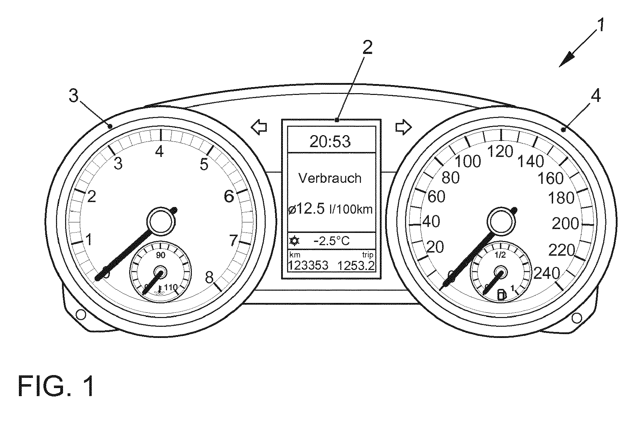

Fig. 1 zeigt ein übliches Kombiinstrument 1, wie es in heutigen Kraftfahrzeugen zum Einsatz kommt und auch zur Darstellung von Informationen diverser Fahrerassistenzsysteme verwendet wird, wenn kein separates weiteres Display vorhanden sein sollte. Das Kombiinstrument 1 umfasst ein Mittendisplay 2, welches zwischen dem linken Drehzahlmesser 3 und dem rechten Tachometer 4 angeordnet ist. Auf dem Mittendisplay 2 können diverse, für den Fahrer wichtige Informationen dargestellt werden, wie hier die Uhrzeit, der durchschnittliche Verbrauch, die Außentemperatur und die zurückgelegte Fahrstrecke sowie den Kilometerstand. Ferner wird das Mittendisplay 2 auch als Mensch-Maschine-Schnittstelle von Fahrerassistenzsystemen, wie beispielsweise einem Park-Lenk-Assistenten, zur Darstellung von Informationen genutzt. Wird das Mittendisplay 2 für einen Anhängerrangierassistenten genutzt, so nutzt der Anhängerrangierassistent ein vorhandenes PLA-Steuergerät (PLA = Park-Lenk-Assistent), wobei das Anhängen eines Anhängers an das Kraftfahrzeug detektiert und der normale Park-Lenk-Assistent deaktiviert wird. Mit anderen Worten, bei angekoppeltem Anhänger ist der Anhängerrangierassistent auf dem PLA-Steuergerät implementiert, wobei eine Bedienung des Anhängerrangierassistenten vor und während des Rangierens möglich ist. Schließlich muss das Kraftfahrzeug noch mit einer Rückfahrkamera ausgerüstet sein.

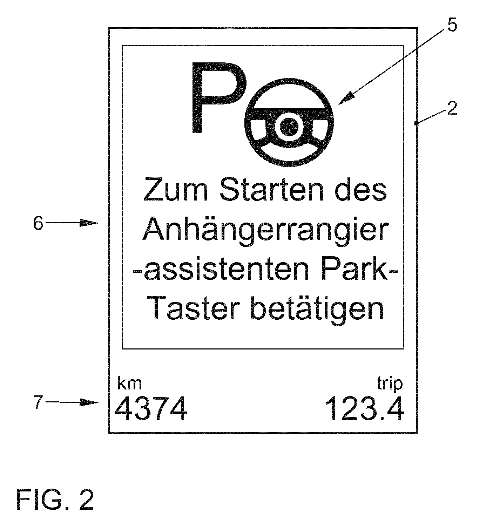

Fig. 2 zeigt die Startabfrage zur Initiierung des Anhängerrangierassistenten. Im Mittendisplay 2 wird bei angekoppeltem Anhänger und bei Einlegen des Rückwärtsgangs eine Startabfrage dargestellt, die aussehen kann wie in Fig. 2 dargestellt. Neben einem Logo 5 bestehend aus einem symbolischen Lenkrad und einem Großbuchstaben "P" ist der Text 6 "Zum Starten des Anhängerrangierassistenten Park-Taster betätigen" im Mittendisplay 2 dargestellt. Damit erhält der Fahrer des Kraftfahrzeugs den Hinweis, dass zum Starten des Anhängerrangierassistenten derselbe Taster wie beim Parklenkassistenten zu verwenden ist. Da nicht das vollständige Mittendisplay 2 zur Darstellung der Startabfrage des Anhängerrangierassistenten benutzt wird, bleibt noch Raum 7 zur Darstellung weiterer Information, hier des Kilometerstands einschließlich der Tageskilometer.

Es erfolgt daher ein Start des Anhängerrangierassistenten durch eine Betätigung des entsprechenden Stellgliedes, der in dieser Ausführungsform durch den PLA-Taster gebildet wird. Erfolgt innerhalb einer vorgegebenen Zeit keine Betätigung des PLA-Tasters, so verschwindet die Startabfrage aus dem Mittendisplay. Ferner wird auch davon ausgegangen, dass der Fahrer keine Unterstützung durch den Anhängerrangierassistenten benötigt, wenn der Fahrer das Kraftfahrzeug in Bewegung versetzt. Ohne Betätigung des PLA-Tasters oder durch ein Bewegen des Fahrzeugs kann der Fahrer daher den Anhänger ohne Unterstützung rangieren.

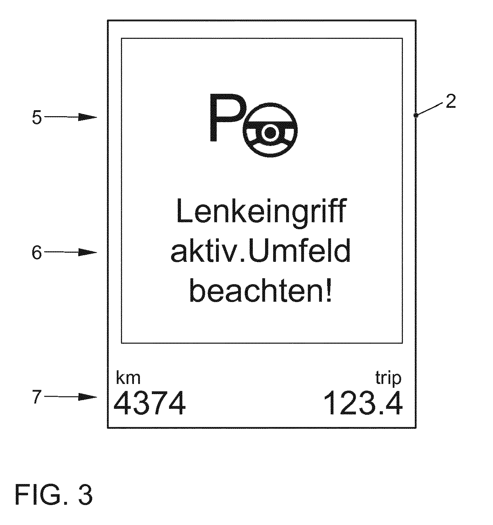

Fig. 3 zeigt den weiteren Schritt innerhalb des Bedienablaufs des Anhängerrangierassistenten. Nachdem der Anhängerrangierassistent durch Betätigen des PLA-Tasters in Betrieb genommen wurde, wird ein Hinweis an den Fahrer im Mittendisplay 2 dargestellt, dass der Anhängerrangierassistent aktiv ist und damit ein aktiver Lenkradeingriff erfolgt. Mit anderen Worten, der Fahrer soll das Lenkrad nicht ergreifen, da die Lenkung vom Anhängerrangierassistenten übernommen wird. Dies kann durch den Text 6 "Lenkeingriff aktiv. Umfeld beachten" erfolgen, wobei das Logo 5 des Anhängerrangierassistenten ebenfalls im Mittendisplay 2 dargestellt wird.

Mit dem Hinweis auf den aktiven Anhängerrangierassistenten wird der entsprechenden gesetzlichen Vorschrift Genüge getan, wobei der Hinweis auf den aktiven Lenkeingriff wieder nach einer vorgegebenen Zeitdauer verschwindet.

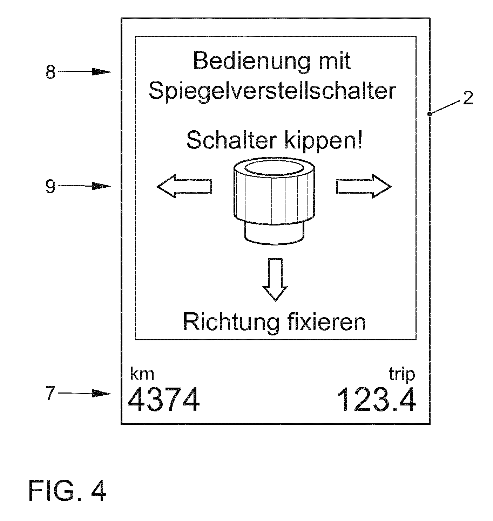

Fig. 4 zeigt den Bedienhinweis des Anhängerrangierassistenten an den Fahrer des Kraftfahrzeugs im Mittendisplay 2. Um keine weiteren Bedienelemente im Kraftfahrzeug bereitstellen zu müssen, erfolgt in der vorliegenden Ausführungsform die Bedienung mit dem Spiegelverstellschalter. Dargestellt ist eine Überschrift 8 mit dem Text "Bedienung mit Spiegelverstellschalter" sowie ein Spiegelverstellschaltersymbol 9 mit Bedienhinweisen, nämlich "Schalter kippen!" sowie "Richtung fixieren", mit entsprechenden Richtungspfeilen der verwendeten Freiheitsgrade des Spiegelverstellschalters. Der Bedienhinweis im Mittendisplay 2 verschwindet mit der Bedienung des Spiegelverstellschalters oder wenn das Fahrzeug in Bewegung gesetzt wird.

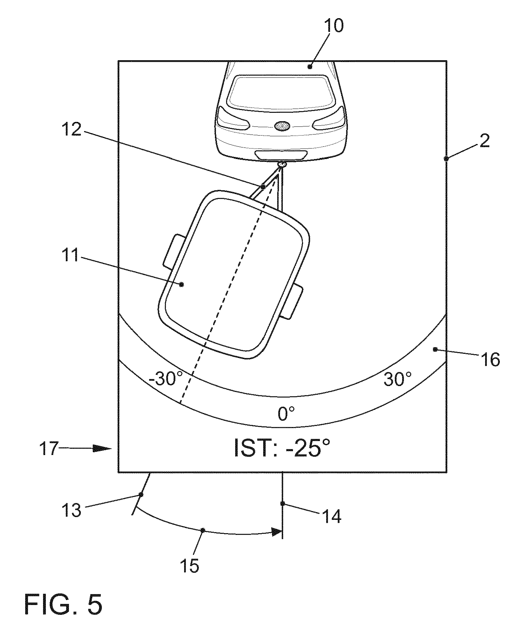

Fig. 5 zeigt den Beginn des aktivierten Anhängerrangierassistenten. Im Mittendisplay 2 ist die aktuelle Gespannsituation bestehend aus dem Fahrzeug 10 und dem Anhänger 11 dargestellt, der mit dem Fahrzeug über eine Deichsel 12 verbunden ist. Es handelt sich bei den Gespannen, die der Anhängerrangierassistent rangieren kann immer um nichtlenkbare Anhänger, d.h. um Anhänger mit starrer Deichsel. Derartige nichtlenkbare Anhänger sind beispielsweise einachsige Anhänger wie Wohnwagen, kleinere Anhänger oder Sportboottrailer. Zweiachsige Anhänger fallen teilweise auch unter die Definition der nichtlenkbaren Anhänger, wenn die beiden Achsen eng zusammen angeordnet sind und keine Achse lenkbar ist. Bei üblichen LKW-Anhängern ist normalerweise die vordere Achse mittels der Deichsel lenkbar und eine derartige Konstellation kann der vorliegende Anhängerrangierassistent nicht rangieren.

Der Knickwinkel 15, den die Längsachse 13 des Anhängers 11 mit der Längsachse 14 des Kraftfahrzeugs 10 bildet, wird mittels einer Rückfahrkamera (nicht dargestellt) des Fahrzeugs 10 bestimmt und in Fig. 5 ist die aktuelle Situation in Draufsicht im Mittendisplay 2 dargestellt, so dass der Fahrer über den Ist- oder Ausgangs-Zustand informiert ist. Zur verbesserten Wahrnehmung der Gespannsituation ist im Mittendisplay 2 ferner ein Winkelband 16 als Kreisausschnitt dargestellt, so dass der Fahrer den aktuellen Knickwinkel 15 anhand des Durchgangs der Längsachse 13 des Anhängers 11 durch das Winkelband 16 visuell wahrnehmen kann. Weiterhin wird der gemessene aktuelle Knickwinkel 15 als Ist-Winkel unterhalb des Winkelbandes 16 in Textform in einem Textfeld 17 eingeblendet.

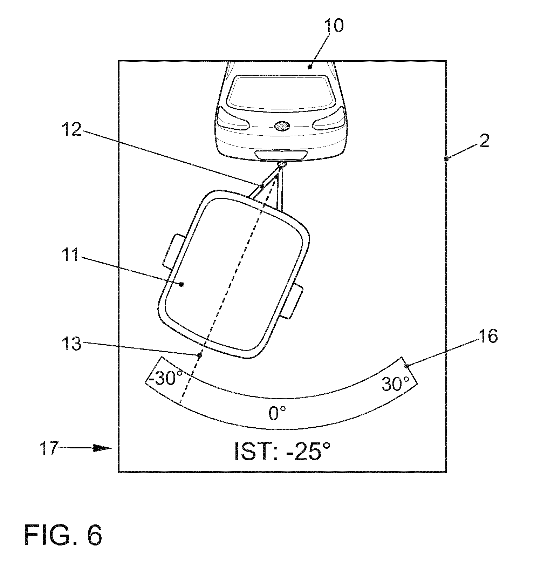

Fig. 6 zeigt den nächsten Schritt des Ablaufs des Anhängerrangierassistenten, in welchem mittels der Rückfahrkamera des Kraftfahrzeugs der maximal mögliche Knickwinkel des Anhängers 11 relativ zum Zugfahrzeug 10 anhand der Länge der Deichsel 12 bestimmt wird. Die Länge der Deichsel und die geometrischen Abmessungen des Anhängers können aus den Umgebungsbildern abgeleitet werden. Als Folge der Bestimmung des maximal möglichen Knickwinkels wird das Winkelband 16 eingegrenzt. Im vorliegenden Beispiel wird er auf ± 30° begrenzt.

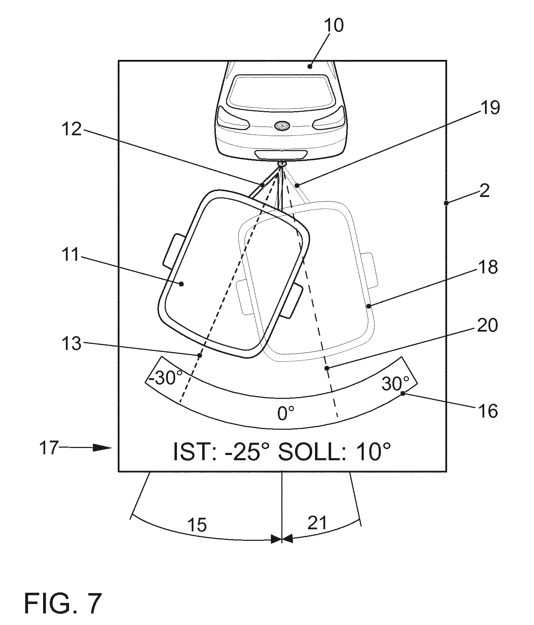

In Fig. 7 wird der darauf folgende Schritt des aktiven Anhängerrangierassistenten, nämlich das Einstellen des Sollwinkels mittels des Spiegelverstellschalters, erläutert. Das Mittendisplay 2 zeigt das Bild des Zugfahrzeugs 10 mit Anhänger 11 in der Ist-Position, der im Folgenden als Ist-Anhänger bezeichnet wird, sowie der Deichsel 12 im Ist-Zustand und der eingezeichneten Längsachse 13 des Ist-Anhängers 11, wodurch im Winkelband 16 der Ist-Knickwinkels 15 angezeigt wird.

Der Fahrer des Zugfahrzeugs 10 stellt nun am Spiegelverstellschalter den Soll-Knickwinkel 21 des Anhängers ein, der zum Rangieren benötigt wird, um das Gespann aus Zugfahrzeug 10 und Anhänger 11 in die gewünschte Zielposition zu rangieren. Dies wird im Mittendisplay 2 graphisch durch das Einblenden eines Soll-Anhängers 18 mit Soll-Deichsel 19 dargestellt, dessen Soll-Längsachse 20 in dem Winkelband 16 den gewählten Soll-Knickwinkel 21 anzeigt. Die beiden Knickwinkel, nämlich der Ist-Knickwinkel 15 und der Soll-Knickwinkel 21, werden nochmals als Textzeile 17 unterhalb des Winkelbandes 16 zur Information des Fahrers dargestellt. Durch den Spiegelverstellschalter kann daher der Fahrer die Position des Soll-Anhängers 18 im Mittendisplay 2 verändern. Dies kann in der graphischen Darstellung beispielsweise so gelöst werden, dass sich der Soll-Anhänger 18 bedingt durch den Spiegelverstellschalter quasi aus dem Ist-Anhänger 11 herausschiebt bis er die vom Spiegelverstellschalter eingestellte Position erreicht hat.

Ist der Soll-Knickwinkel 21 und damit die Position des Soll-Anhängers 18 im Mittendisplay 2 eingestellt, so wird das Fahrzeug in rückwärtiger Richtung durch den Anhängerrangierassistenten bewegt, wobei dieser die Lenkung des Fahrzeugs 10 übernimmt, während der Fahrer das Gas- und Bremspedal bedient. Anzumerken ist, dass der Soll-Knickwinkel 21 prinzipiell auch noch während der Rückwärtsfahrt verändert werden kann, beispielsweise wenn der Fahrer bemerkt, dass der gewählte Soll-Knickwinkel 21 nicht optimal ist.

Durch das Rangiermanöver des Anhängerrangierassistenten wird die Ist-Position des Anhängers 11 verändert. Mit anderen Worten, im Bild des Mittendisplays 2 schiebt sich der Ist-Anhänger 11 während der Rückwärtsfahrt des Gespanns bestehend aus Zugfahrzeug 10 und Ist-Anhänger 11 in Richtung der Position des Soll-Anhängers 18. Am Ende des Manövers ist die Position des Soll-Anhängers 18 erreicht und der Ist-Anhänger 11 hat sich in der graphischen Darstellung unter den Soll-Anhänger 18 geschoben. Soll-Anhänger 18 und Ist-Anhänger 11 sind daher identisch, wenn das Gespann den Soll-Knickwinkel 21 erreicht hat.

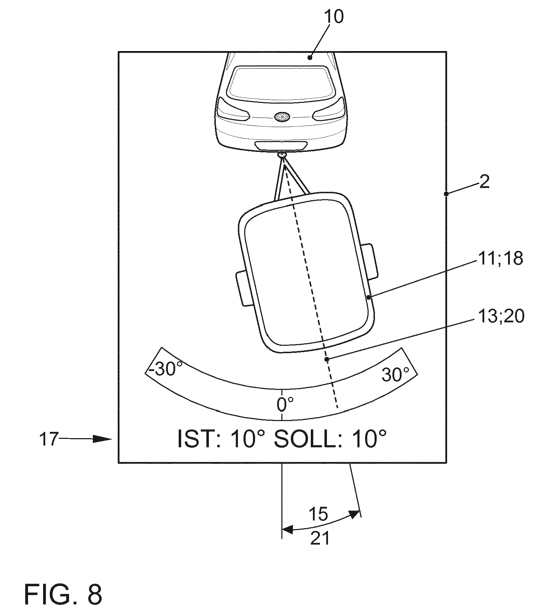

Fig. 8 zeigt nun die Situation des Gespanns, wenn dieses den Soll-Knickwinkel 21 erreicht hat. In diesem Fall sind Ist-Anhänger 11 und Soll-Anhänger 18 identisch, wie dies in Fig. 8 durch die gleichzeitige Verwendung der beiden Bezugszeichen symbolisiert werden soll. Mit anderen Worten, der Anhänger 11, 18 ist in die gewünschte Richtung ausgerichtet und das Gespann soll diese Richtung halten, bis es die endgültige Zielposition erreicht hat. Das Erreichen des Soll-Knickwinkels 21 wird in dem Textfeld 17 angezeigt durch den Text: "IST: 10° SOLL: 10°".

Um zu bewirken, dass das Gespann die durch den erreichten Soll-Knickwinkel 21 gewünschte Richtung beibehält, muss der Winkel zwischen der Längsachse des Zugfahrzeugs 10 und der Längsachse des Anhängers 11 durch ein geeignetes Rangiermanöver auf Null gebracht werden, wobei die Richtung des Anhängers 11 nicht verändert werden darf. Dies wird dadurch erreicht, dass die erreichte Einstellung fixiert wird, indem der Anhängerrangierassistenten sozusagen "genullt" wird.

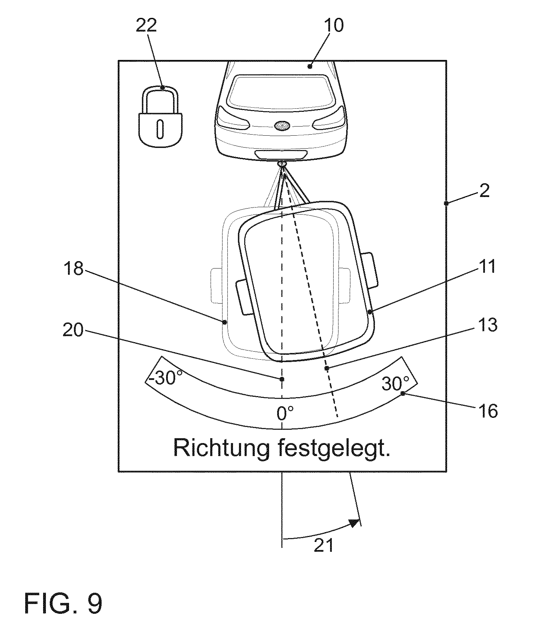

Fig. 9 zeigt nun die "Nullung", d.h. die Fixierung der Richtung des erreichten Soll-Knickwinkels 21 als neue Null-Marke. Dies geschieht durch das in Fig. 2 dargestellte Ziehen des Spiegelverstellschalters, wodurch die Richtung des Soll-Knickwinkels 21 als aktuelle Orientierung festgelegt wird. Mit dieser Nullung wird der vormalige Soll-Anhänger 18 wieder zum Ist-Anhänger 11 und im Mittendisplay wird ein neuer virtueller Soll-Anhänger 18 mit einer virtuellen Längsachse 20 dargestellt, wobei die virtuelle Längsachse 20 einen Soll-Knickwinkel von Null Grad dargestellt. Das Fixieren der erreichten Richtung des Soll-Knickwinkels 21 von 10° durch das Ziehen des Spiegelverstellschalters bewirkt die Darstellung eines Fixierungssymbols beispielsweise in Gestalt eines Schlosssymbols. Ferner wird in der Textzeile 17 der Text "Richtung festgelegt" eingeblendet.

Um nun zu erreichen, dass die durch Erreichen des Soll-Knickwinkels 21 vorgegebene Richtung des realen Anhängers 11 beim weiteren Rangieren beibehalten wird, muss die Längsachse des Zugfahrzeugs 10 in Deckung mit der Längsachse 13 des realen Anhängers 11 gebracht werden, die nun in Richtung des erreichten Soll-Knickwinkels 21 zeigt. Dies kann auf prinzipiell auf zwei Wegen erreicht werden.

Eine Möglichkeit besteht darin, das Gespann in rückwärtiger Richtung so zu rangieren, dass die vorgegebene Richtung beibehalten wird, aber ein Parallelversatz zulässig ist. Dieser erste Modus kann bei einer breiten Fahrgasse gewählt werden, wo es nicht so sehr darauf ankommt, dass das Gespann innerhalb enger Grenzen manövrieren muss. Ein Beispiel hierfür wäre das Rangieren eines Anhängers für Sportzwecke auf einer breiten Wiese oder großen Stellplatz. Es wird in diesem ersten Modus die aktuelle Orientierung des Anhängers erfasst und als Soll-Orientierung übernommen. Die Zieltrajektorie des ersten Modus liegt dann parallel zur aktuellen Fahrtrichtung des Anhängers 11 und das assistentengestützte Rangieren kann einzügig erfolgen. Die endgültige Zielposition des Gespanns befindet sich dann um einen geringen Abstand versetzt neben der durch die aktuelle Fahrtrichtung des Anhängers anvisierten Zielposition. Der geringe parallele Versatz ist jedoch bei ausreichend Platz nicht störend.

Die zweite Möglichkeit wird durch ein Rangieren in einem engen Umfeld bedingt. Liegt ein enges Umfeld vor, beispielsweise soll das Gespann in eine Parklücke oder in eine Einfahrt oder Gasse hinein manövriert werden, ist ein paralleler Versatz nicht zulässig, sondern die aktuelle Richtung des Anhängers muss beibehalten werden, um zur endgültigen Zielposition zu gelangen. Auch in diesem Modus wird die aktuelle Orientierung des Anhängers erfasst und als Sollorientierung übernommen. Die Zieltrajektorie muss in diesem Modus jedoch genau in der Richtung der aktuellen Orientierung ohne einen parallelen Versatz liegen, da ein paralleler Versatz in dem engen Umfeld nicht möglich ist. Dies bedingt im Allgemeinen ein mehrzügiges Rangieren und der Fahrer wird vom Anhängerrangierassistenten zum Gangwechsel aufgefordert.

In beiden Moden schiebt sich während des Rangierens der aktuelle Ist-Anhänger 11 unter den im Mittendisplay 2 unter dem Winkel von Null Grad dargestellten virtuellen Soll-Anhänger 18.

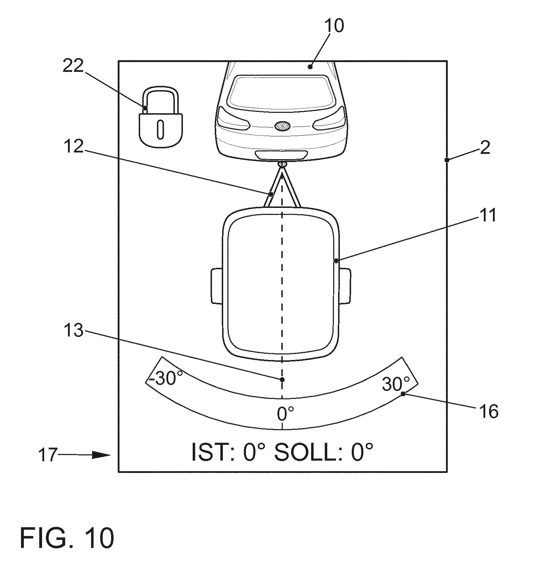

Fig. 10 zeigt die Darstellung im Mittendisplay 2, wenn der Zielstandpunkt erreicht ist, wobei der Zielstandpunkt diejenige Position des Gespanns ist, in welchem die Längsachse des Fahrzeugs 10 mit der Längsachse 13 des Anhängers 11 übereinstimmt. Die Längsachse 13 der Position des realen Anhängers 11 schneidet das Winkelband 16 unter Null Grad, wobei die Null Grad-Richtung der Orientierung des Soll-Knickwinkels 21 der Figuren 7 und 8 entspricht, was durch das Fixiersymbol 22 verdeutlicht wird. Das Erreichen des Zielstandpunktes wird dem Fahrer überdies in der Textleiste 17 durch den Text "IST: 0° SOLL: 0°" angezeigt. Ab dem erreichten Zielstandpunkt kann der Anhängerrangierassistent das Gespann bestehend aus Zugfahrzeug 10 und Anhänger 11 in rückwärtiger Richtung geradeaus bis zur endgültigen Parkposition bewegen.

### Bezugszeichenliste

- 1: Kombiinstrument
- 2: Mittendisplay
- 3: Drehzahlmesser
- 4: Tachometer
- 5: Logo Anhängerrangierassistent
- 6: Text
- 7: Informationsbalken
- 8: Überschrift
- 9: Symbol Spiegelverstellschalter
- 10: Fahrzeug
- 11: realer Anhänger - Istzustand
- 12: Deichsel Istzustand
- 13: Längsachse Anhänger Istzustand
- 14: Längsachse Fahrzeug
- 15: Knickwinkel Istzustand
- 16: Winkelband
- 17: Textleiste
- 18: virtueller Anhänger - Sollzustand
- 19: Deichsel Sollzustand
- 20: Längsachse Sollzustand
- 21: Knickwinkel Sollzustand
- 22: Fixiersymbol

## Patentansprüche

1. Verfahren zum Rangieren eines Gespanns bestehend aus einem Zugfahrzeug (10) und einem Anhänger (11), wobei der Anhänger (11) mittels einer nichtlenkbaren Deichsel (12) mit dem Zugfahrzeug (10) verbunden ist,
**dadurch gekennzeichnet dass**, das Zugfahrzeug (10) mittels einer Rückfahrkamera das rückwärtige Umfeld einschließlich Anhänger (11) beobachtet,
mit den folgenden Schritten:
a) Bestimmung des Ist-Knickwinkels (15) des Anhängers (11) relativ zum Zugfahrzeug,
b) Bestimmung der Deichsellänge und des maximalen Knickwinkels des Anhängers,
c) Eingabe des Soll-Knickwinkels (21) des Anhängers,
d) Rückwärtsfahren des Zugfahrzeugs (10) mit zumindest aktiver Lenkunterstützung bis zum Erreichen des Soll-Knickwinkel (21) des Anhängers,
e) Fixieren der durch den Soll-Knickwinkel (21) vorgegebenen Fahrtrichtung,
f) Rangieren des Zugfahrzeugs (10) mit zumindest aktiver Lenkunterstützung unter Beibehaltung der vorgegebenen Fahrtrichtung bis zum Erreichen einer endgültigen Parkposition.

2. Verfahren nach Anspruch 1, **dadurch gekennzeichnet, dass** Schritt f) ausgeführt wird, indem in einem ersten Schritt f1) durch ein Rangieren des Zugfahrzeug (10) die Längsachse des Zugfahrzeugs (10) in Übereinstimmung mit der Längsachse (13) des Anhängers (11) unter Beibehaltung der vorgegebenen Fahrtrichtung gebracht wird, und in einem anschließenden zweiten Schritt f2) ein Rückwärtsfahren des gerade ausgerichteten Gespanns mit zumindest aktiver Lenkunterstützung bis zum Erreichen der endgültige Parkposition erfolgt.

3. Verfahren nach Anspruch 2, **dadurch gekennzeichnet, dass** zur Durchführung des Schrittes f1) zwei Moden zur Verfügung stehen, wobei der erste Modus das Rangieren bei breiter Fahrgasse und der zweite Modus das Rangieren bei enger Fahrgasse betreffen.

4. Verfahren nach Anspruch 3, **dadurch gekennzeichnet, dass** die Durchführung des Schrittes f1) im ersten Modus in einem einzügigen Rangiervorgang erfolgt, so dass die Zieltrajektorie des Schrittes f2) zur Erreichung der endgültigen Parkposition im ersten Modus parallel zur vorgegebenen Fahrtrichtung liegt.

5. Verfahren nach Anspruch 3, **dadurch gekennzeichnet, dass** die Durchführung des Schrittes f1) im zweiten Modus in einem mehrzügigen Rangiervorgang erfolgt, so dass die Zieltrajektorie des Schrittes f2) zur Erreichung der endgültigen Parkposition im zweiten Modus in der vorgegebenen Fahrtrichtung liegt.

6. Verfahren nach einem der vorangegangenen Ansprüche, **dadurch gekennzeichnet, dass** die Eingabe des Soll-Knickwinkels (21) in Schritt c) im Stand oder während der Rückwärtsfahrt erfolgen kann.

7. Anhängerrangierassistent eines Kraftfahrzeugs (10) zur Durchführung des Verfahrens nach einem der vorangegangenen Ansprüche mit einer Steuereinrichtung, einer HMI-Einrichtung zur Kommunikation mit dem Fahrer des Kraftfahrzeugs, eine Einrichtung zur Detektion eines angekoppelten Anhängers (11), und einem Aktuator zur Betätigung der Lenkung,
**dadurch gekennzeichnet, dass**
der Anhängerrangierassistent eine Rückfahrkamera zur Aufnahme von Bildern der rückwärtigen Umgebung aufweist,
die Steuereinrichtung eine Einrichtung zur Bestimmung des Ist-Knickwinkels (15) und zur Bestimmung des maximal zulässigen Knick-Winkels des angekoppelten Anhängers (11) aus den Bildern der Rückfahrkamera aufweist, und
die HMI-Einrichtung eine Einrichtung zur Eingabe eines Soll-Knickwinkels (21) des Anhängers (11) aufweist, wobei
die HMI-Einrichtung die Ist-Position (11) des Anhängers im Ist-Knickwinkel (15) und die Soll-Position (18) des Anhängers im Soll-Knickwinkel (21) dynamisch darstellt.

8. Anhängerrangierassistent nach Anspruch 7, **dadurch gekennzeichnet, dass** zur Aktivierung der Assistenz die HMI-Einrichtung dem Fahrer eine vorgegebene Anzahl von Informationshinweisen gibt.

9. Anhängerrangierassistent nach einem der Ansprüche 7 oder 8, **dadurch gekennzeichnet, dass** die HMI-Einrichtung eine Einrichtung zur Fixierung eines erreichten Soll-Knickwinkels (21) aufweist, wobei die Steuereinrichtung den fixierten Soll-Knickwinkel (21) als vorgegebene Richtung zur Ermittlung einer Zieltrajektorie zur Erreichung einer endgültigen Parkposition verwendet.

10. Anhängerrangierassistent nach Anspruch 9, **dadurch gekennzeichnet, dass** die HMI-Einrichtung eine Auswahleinrichtung aufweist, mittels welcher ausgewählt wird, ob die Zieltrajektorie parallel zur vorgegebenen Richtung oder in der vorgegebenen Richtung verläuft.

## Claims

1. Method for manoeuvring a towing vehicle-trailer combination composed of a towing vehicle (10) and a trailer (11), wherein the trailer (11) is connected to the towing vehicle (10) by means of a non-steerable drawbar (12),
**characterized in that** the towing vehicle (10) observes the surroundings, including the trailer (11), behind the vehicle by means of a reversing camera, having the following steps:
a) determining the actual bending angle (15) of the trailer (11) relative to the towing vehicle,
b) determining the drawbar length and the maximum bending angle of the trailer,
c) inputting the setpoint bending angle (21) of the trailer,
d) reversing the towing vehicle (10) with at least an active steering assistance system until the setpoint bending angle (21) of the trailer is reached,
e) fixing the direction of travel predefined by the setpoint bending angle (21), and
f) manoeuvring the towing vehicle (10) with at least an active steering assistance system while maintaining the predefined direction of travel until a final parked position is reached.

2. Method according to Claim 1, **characterized in that** step f) is carried out **in that**, in a first step f1), the longitudinal axis of the towing vehicle (10) is moved in accordance with the longitudinal axis (13) of the trailer (11) by manoeuvring the towing vehicle (10) while maintaining the predefined direction of travel, and in a subsequent second step f2) reversing of the towing vehicle-trailer combination which is oriented in a straight arrangement occurs with at least an active steering assistance system until the final parked position is reached.

3. Method according to Claim 2, **characterized in that** in order to carry out step f1) two modes are available, wherein the first mode relates to the manoeuvring in the case of a wide driving lane, and the second mode relates to manoeuvring in the case of a narrow driving lane.

4. Method according to Claim 3, **characterized in that** step f1) is carried out in the first mode in a single-movement manoeuvring operation, with the result that the target trajectory of the step f2) for reaching the final parked position in the first mode is parallel to the predefined direction of travel.

5. Method according to Claim 3, **characterized in that** step f1) is carried out in the second mode in a multi-movement manoeuvring operation, with the result that the target trajectory of step f2) for reaching the final parked position in the second mode is in the predefined direction of travel.

6. Method according to one of the preceding claims, **characterized in that** the inputting of the setpoint bending angle (21) in step c) can take place in a stationary state or during reversing.

7. Trailer manoeuvring assistant of a motor vehicle (10) for carrying out the method according to one of the preceding claims having a control device, a HMI device for communicating with the driver of the motor vehicle, a device for detecting a hitched trailer (11), and an actuator for actuating the steering,
**characterized in that**
the trailer manoeuvring assistant has a reversing camera for capturing images of the surroundings behind the vehicle,
the control device has a device for determining the actual bending angle (15) and for determining the maximum permissible bending angle of the coupled trailer (11) from the images of the reversing camera, and
the HMI device has a device for inputting a setpoint bending angle (21) of the trailer (11), wherein
the HMI device dynamically represents the actual position (11) of the trailer at the actual bending angle (15) and the setpoint position (18) of the trailer at the setpoint bending angle (21).

8. Trailer manoeuvring assistant according to Claim 7, **characterized in that** in order to activate the assistance the HMI device provides the driver with a predefined number of information instructions.

9. Trailer manoeuvring assistant according to one of Claims 7 and 8, **characterized in that** the HMI device has a device for fixing a setpoint bending angle (21) which has been reached, wherein the control device uses the fixed setpoint bending angle (21) as a predefined direction for determining a target trajectory for reaching a final parked position.

10. Trailer manoeuvring assistant according to Claim 9, **characterized in that** the HMI device has a selection device by means of which it is selected whether the target trajectory runs parallel to the predefined direction or in the predefined direction.

## Revendications

1. Procédé pour manoeuvrer un attelage composé d'un véhicule tracteur (10) et d'une remorque (11), la remorque (11) étant reliée au véhicule tracteur (10) au moyen d'un timon (12) non orientable,
**caractérisé en ce que** le véhicule tracteur (10) observe le champ périphérique arrière, y compris la remorque (11), au moyen d'une caméra de recul, le procédé comprenant les étapes suivantes :
a) détermination de l'angle de cassure réel (15) de la remorque (11) par rapport au véhicule tracteur,
b) détermination de la longueur du timon et de l'angle de cassure maximal de la remorque,
c) saisie de l'angle de cassure de consigne (21) de la remorque,
d) marche arrière du véhicule tracteur (10) avec au moins la direction assistée active jusqu'à atteindre l'angle de cassure de consigne (21) de la remorque,
e) verrouillage du sens de déplacement prédéfini par l'angle de cassure de consigne (21),
f) manoeuvre du véhicule tracteur (10) avec au moins la direction assistée active en conservant le sens de déplacement prédéfini jusqu'à atteindre une position de stationnement définitive.

2. Procédé selon la revendication 1, **caractérisé en ce que** l'étape f) est exécutée **en ce que** dans une première étape f1), l'axe longitudinal du véhicule tracteur (10) est amené en coïncidence avec l'axe longitudinal (13) de la remorque (11) par une manoeuvre du véhicule tracteur (10) en conservant le sens de déplacement prédéfini et, dans une deuxième étape f2), une marche arrière de l'attelage orienté de manière rectiligne est effectuée avec au moins la direction assistée active jusqu'à atteindre la position de stationnement définitive.

3. Procédé selon la revendication 2, **caractérisé en ce que** deux modes sont disponibles pour l'exécution de l'étape f1), le premier mode concernant la manoeuvre sur une voie de circulation large et le deuxième mode la manoeuvre sur une voie de circulation étroite.

4. Procédé selon la revendication 3, **caractérisé en ce que** l'exécution de l'étape f1) dans le premier mode s'effectue dans une opération de manoeuvre en une passe, de sorte que la trajectoire visée de l'étape f2) pour atteindre la position de stationnement définitive dans le premier mode est parallèle au sens de déplacement prédéfini.

5. Procédé selon la revendication 3, **caractérisé en ce que** l'exécution de l'étape f1) dans le deuxième mode s'effectue dans une opération de manoeuvre en plusieurs passes, de sorte que la trajectoire visée de l'étape f2) pour atteindre la position de stationnement définitive dans le deuxième mode se trouve dans le sens de déplacement prédéfini.

6. Procédé selon l'une des revendications précédentes, **caractérisé en ce que** la saisie de l'angle de cassure de consigne (21) à l'étape c) peut être effectuée à l'arrêt ou pendant la marche arrière.

7. Assistant de manoeuvre de remorque d'un véhicule automobile (10) destiné à mettre en oeuvre le procédé selon l'une des revendications précédentes, comprenant un dispositif de commande, un dispositif HMI servant à la communication avec le conducteur du véhicule, un dispositif de détection d'une remorque (11) attelée, et un actionneur servant à actionner la direction, **caractérisé en ce que**
l'assistant de manoeuvre de remorque possède une caméra de recul destinée à enregistrer des images de l'environnement à l'arrière,
le dispositif de commande possède un dispositif destiné à déterminer l'angle de cassure réel (15) et destiné à déterminer l'angle de cassure maximum admissible de la remorque (11) attelée à partir des images de la caméra de recul, et
le dispositif HMI possède un dispositif destiné à la saisie d'un l'angle de cassure de consigne (21) de la remorque (11),
le dispositif HMI représentant de manière dynamique la position réelle (11) de la remorque dans l'angle de cassure réel (15) et la position de consigne (18) de la remorque dans l'angle de cassure de consigne (21).

8. Assistant de manoeuvre de remorque selon la revendication 7, **caractérisé en ce que** pour activer l'assistance, le dispositif HMI donne au conducteur un nombre prédéfini de consignes d'information.

9. Assistant de manoeuvre de remorque selon l'une des revendications 7 ou 8, **caractérisé en ce que** le dispositif HMI possède un dispositif destiné à verrouiller un angle de cassure de consigne (21) atteint, le dispositif de commande utilisant l'angle de cassure de consigne (21) verrouillé comme sens prédéfini pour la détermination d'une trajectoire visée en vue d'atteindre une position de stationnement définitive.

10. Assistant de manoeuvre de remorque selon la revendication 9, **caractérisé en ce que** le dispositif HMI possède un dispositif de sélection à l'aide duquel il est sélectionné si la trajectoire visée s'étend parallèlement au sens prédéfini ou dans le sens prédéfini.
